# EUROPÄISCHE PATENTSCHRIFT

(11) **EP 1 387 896 B1**
(45) Veröffentlichungstag und Bekanntmachung des Hinweises auf die Patenterteilung: **05.01.2005**
(21) Anmeldenummer: 02738028.6
(22) Anmeldetag: 02.05.2002
(51) Int. Cl.: C23C 4/04, C23C 4/10, C23C 4/12, A47J 36/02

(54) **KOCHGESCHIRR MIT THERMISCH GESPRITZTER BESCHICHTUNG UND VERFAHREN ZUR HERSTELLUNG DER BESCHICHTUNG**
COOKING UTENSILS WITH THERMALLY SPRAYED COATING AND METHOD FOR THE PRODUCTION OF SAID COATING
USTENSILE DE CUISINE A REVETEMENT PAR PROJECTION THERMIQUE ET PROCEDE DE PRODUCTION DE CE REVETEMENT

(30) Priorität: 05.05.2001 DE 10121933; 23.05.2001 DE 10125353
(43) Veröffentlichungstag der Anmeldung: 11.02.2004
(73) Patentinhaber: Linde Aktiengesellschaft, 65189 Wiesbaden (DE)
(72) Erfinder: HEINRICH, Peter, 82110 Germering (DE); KRÖMMER, Werner, 84034 Landshut (DE)
(86) Internationale Anmeldenummer: PCT/EP2002/004873
(87) Internationale Veröffentlichungsnummer: WO 2002/090611

(56) Entgegenhaltungen:
- DE-A- 19 610 054
- DE-U- 7 324 829
- FR-A- 2 784 280
- PATENT ABSTRACTS OF JAPAN vol. 014, no. 522 (C-0778), 15. November 1990 (1990-11-15) & JP 02 217458 A (NKK CORP), 30. August 1990 (1990-08-30)
- PATENT ABSTRACTS OF JAPAN vol. 018, no. 344 (C-1218), 29. Juni 1994 (1994-06-29) & JP 06 081292 A (ISHIKAWAJIMA HARIMA HEAVY IND CO LTD), 22. März 1994 (1994-03-22)
- PATENT ABSTRACTS OF JAPAN vol. 002, no. 152 (C-031), 20. Dezember 1978 (1978-12-20) & JP 53 118232 A (SUMITOMO CHEM CO LTD), 16. Oktober 1978 (1978-10-16)

## Beschreibung

Die Erfindung betrifft ein Verfahren zum Beschichten von Kochgeschirr mittels thermischen Spritzens, wobei die schichtausbildenden Kunststoffpartikel und Oxid-Partikel dem Spritzstrahl zugeführt werden, und wobei die Kunststoffpartikel und die Oxid-Partikel getrennt und - in Spritzrichtung gesehen - mit einem Abstand voneinander zugegeben werden, und wobei die Zugabe der Kunststoffpartikel von der Spritzdüse weiter entfernt erfolgt, als diejenige der Oxid-Partikel sowie entsprechendes Kochgeschirr.

Thermische Spritzverfahren zeichnen sich im wesentlichen dadurch aus, dass in der Regel gleichmäßig aufgetragene Beschichtungen von hoher Qualität und Güte ermöglichen. Das Plasmaspritzen und das Hochgeschwindigkeits-Ftammspritzen zeichnen sich durch besonders gute Hafteigenschaften auf dem Untergrund und besonders dichte Spritzschichten aus.

Es ist bekannt, Kochgeschirr zu beschichten, um Anbacken oder Ankleben von darin zubereiteten Speisen zu verhindern. Diese Antihaftschicht besteht dabei üblicherweise aus Kunststoffen, im Regelfall PTFE, also sog. Teflon. Anteile aus Hartstoffen, meist die Oxide Al₂O₃ oder Al₂O₂TiO₂, sorgen dabei für eine hohe Kratzfestigkeit. Als Grundwerkstoff für das Geschirr dienen dabei im allgemeinen Aluminium, Aluminium-Legierungen, Guss oder Edelstahl. Neben dem Verfahren des thermischen Spritzens zum Aufbringen der Beschichtung, auf welches sich diese Erfindung bezieht und bei welchem Kunststoff- und Oxid-Partikel als Spritzpartiket benutzt werden, ist es derzeit auch üblich eine kratzfeste Beschichtung in einem zweiten Arbeitsschritt mit einer antihaftenden Oberflächenversiegelung zu versehen, um die gewünschte Kombination aus antihaftend und kratzfest zu erzielen. Auch aus der FR 2784280 ist das beschichten von Kochgeschirr bekannt Es wird eine Mischung aus Metall- und Keramikpulver zur Beschichtung verwendet, welcher als weitere Komponente auch PTFE zugegeben werden kann.

Für das Beschichten von Kochgeschirr werden die oben genannten Oxide und Kunststoffe verwendet. Ein Nachteil, dieser, aus dem Stand der Technik bekannten, thermisch gespritzten Beschichtungen an Kochgeschirr besteht darin, dass diese verfahrensbedingt nur einen geringen Kunststoffanteil enthalten. Um Kunststoffe und Oxide in die Beschichtung einzubringen, gibt es verschiedene Verfahren. So wird der Kunststoff in das Oxidpulver eingeschlossen, um dessen Verbrennen in der Flamme zu vermeiden. Dieser Verbund wird nun zum Flammspritzen verwendet Problematisch ist hierbei die nicht ausreichende Konzentration des Kunststoffes und seine unregelmäßige Verteilung. Bei der Methode des Plasmaspritzens wird der Kunststoff und das Oxid bereits vor dem Spritzen vermengt. Problematisch wird dies jedoch bei einem höheren Kunststoffanteil, welcher für gute Antihafteigenschaften gewünscht wird, da der Kunststoff, wenn er einen größeren Anteil hat, zu Verbrennen und Verdampfen beginnt.

Aus der JP 02217458 ist die getrennte Zugabe von Kermik- und Plastikpulver beim Flammspritzen bekannt. Die Zugabe des Keramikpulvers erfolgt in die heiße Flamme, während das leicht schmelzende Plastikpulver erst nahe an der zu beschichtenden Oberfläche zugegeben wird.

Aufgabe der vorliegenden Erfindung ist daher, ein Verfahren der eingangs genannten Art aufzuzeigen, durch welches es ermöglicht wird, die auf den Kunststoffen basierende Antihafteigenschaft und die auf die Oxide zurückzuführende Kratzfestigkeit des beschichteten Kochgeschirrs zu erhöhen.

Die Aufgabe wird erfindungsgemäß dadurch gelöst, dass der Kunststoffanteil beim Beschichten gleichmäßig oder sprunghaft erhöht wird, wobei das Beschichten in einem Arbeitsgang erfolgt Durch die getrennte Zugabe können die angesprochenen Spritzartikel in weitgehend beliebigem Verhältnis zueinander eingestellt wenden, da die Kunststoffpartikel so in den Spritzstrahl gegeben werden, dass die thermische Energie des Spritzstrahls soweit abgesunken ist, dass deren potentielle Verbrennung und Verdunstung weitgehend ausgeschlossen wird. Mit diesem Verfahren wird es möglich, Kochgeschirr mit einer solchen Beschichtung zu versehen, die einerseits in ausreichend großer Menge Kunststoffteilchen und anderseits einen genügend großen Anteil aus oxidischen Hartstoffen enthält um gute Antihafteigenschaften bei hoher Kratzfestigkeit zu gewährleisten. In dem erfindungsgemäßen Verfahren wird der Kunststoffanteil beim Beschichten gleichmäßig oder sprunghaft erhöht, wobei das Beschichten in einem Arbeitsgang erfolgt. Damit wird es möglich das Verhältnis Kunststoff- zu Oxid-Partikel wunschgemäß festzulegen und in einem einzigen Arbeitsschritt anzubringen. Ein weiterer Arbeitsschritt bei der Fertigung des Kochgeschirrs, wie bei der Beschichtung mit anschließender Oberflächenversiegelung notwendig, entfällt, wodurch sich die Herstellung vereinfacht und verbilligt.

Bevorzugt wird bei dem erfindungsgemäßen Verfahren neben dem Oxid ein Kunststoff in relativ großer Menge, nämlich in einem Anteil von bis zu 80 Vol.-% an der Gesamtmenge der Spritzpartikei zugeführt Mit diesem hohen Kunststoffanteil werden sehr gute Antihafteigenschaften erreicht.

Besonders vorteilhaft sind Kunststoffanteite von 10 bis 70 Vol.-%, vorzugsweise 30 bis 60 Vol.-%, im Spritzmaterial.

Die Technik des Plasmaspritzen und Hochgeschwindungskeits-Flammspritzen werden vorteilhafterweise für das erfindungsgemäße Verfahren verwendet.

In Ausgestaltung der Erfindung wird vorteithafterweise der Abstand für die Zugabe der Kunststoffpartikel in den Spritzstrahl relativ weit von der Spritzdüse entfemt gewählt an einer Stelle, wo die thermische Energie im Spritzstrahl soweit abgesunken ist, dass die Kunststoffpartikel nur noch Anschmelzen und nicht mehr Verbrennen oder Verdunsten. Dagegen werden die Oxid-Partikel an einer Stelle mit hoher thermischer Energie zugegeben, da diese im Spritzstrahl verändert werden müssen, um eine kratzfeste Beschichtung zu bilden.

In Ausgestaltung der Erfindung wird der Winkel, unter welchem die Spritzpartikel zugefügt werden, zwischen 30° und 150° - bezogen auf die Spritzrichtung - gewählt.

Als Oxide werden bevorzugt Al₂O₃ oder Al₂O₂TiO₂ benutzt.

Als Gase für das thermische Spritzen kommen alle hierfür bekannten Gase und deren Gemische wie Propan, Propen, Ethylen, Acethylen, Wasserstoff, Sauerstoff und die Inertgase in Betracht.

Als Kunststoff wird bevorzugt PTFE, sog. Teflon, benutzt.

Die gestellte Aufgabe wird hinsichtlich des Kochgeschirrs dadurch gelöst, dass eine thermisch gespritzte, kratzfeste Antihaftbeschichtung aus Kunststoff und Oxiden mit einem Anteil an Kunststoff in der Gesamtmenge der Spritzpartikel bis zu 80 Vol.-% aufgebracht wird, die sich dadurch auszeichnet, dass der Anteil des Kunststoffs innerhalb einer, in einem Arbeitsgang aufgespritzten Beschichtung gleichmäßig oder sprunghaft zunimmt und nur die oberste Schicht einen Kunststoffanteil von bis zu 80 Vol.-% am Spritzmaterial erreicht. Der hohe Kunststoffanteil in der Beschichtung sorgt somit für gute Antihafteigenschaften.

Durch den wunschgemäß eingestellten, zunehmenden Kunststoffanteil lässt sich die Kratzfestigkeit erhöhen ohne dabei die Antihafteigenschaften zu verschlechtem. Die Beschichtung besteht dabei aus einer einzigen Schicht und ihre Eigenschaften sind durch sie selbst bestimmt und nicht durch Eigenschaften einer Kombination von Grundbeschichtung und Oberflächenversiegelung.

Die Beschichtung des Kochgeschirrs ist mittels Plasmaspritzens oder Hochgeschwindigkeits-Flammspritzens aufgebracht.

Der Korpus des Kochgeschirrs besteht in Vorteil aus Aluminium, Aluminium-Legierungen, Guss oder Edelstahl.

Im folgendem soll die Erfindung anhand eines Beispiels mit vorteilhaften Varianten näher erläutert werden:

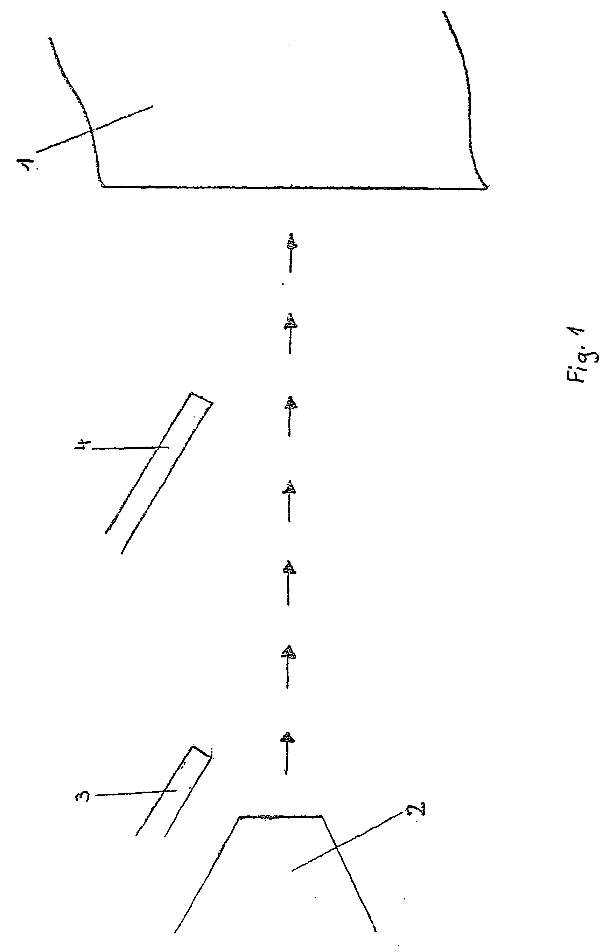

Im Beispiel wird anhand von Figur 1 ein Verfahren zum Herstellen einer Beschichtung mit 40 Vol.-% Kunststoff beschrieben, in welcher der Kunststoffanteil von 0 bis 60 Vol.-% in der Gesamtmenge der Spritzpartikel kontinuierlich zunimmt.

Mit Hilfe von Figur 1 wird das erfingsgemäße Verfahren zur Herstellung einer Beschichtung mit 40 Vol.-% Kunststoff in einer vorteilhaften Ausgestaltung vorgestellt und die Zufuhr der Spritzpartikel erläutert. Für das thermische Spritzen wird eine Spritzpistole, die nach der konventionellen Technik des Hochgeschwindigkeits-Flammspritzens arbeitet, benutzt Die Spritzpistole endet mit einer Düse 2. Das Werkstück 1, also das Kochgeschirr, befindet sich in einem Abstand von 30 cm vor der Düse 1 des Flammspritzers. In einem Abstand von 3 cm wird unter einem Winkel von 30° das Oxidpulver aus einem Pulverrohr 3 zugeführt. In einem Abstand von 20 cm vor der Düse 2 befindet sich eine weitere Apparatur für die Zufuhr der Kunststoffpartikel. Aus einem Rohr 4 werden die Kunststoffpartikel ebenfalls unter einem Winkel von 30° dem Spritzstrahl zugeführt Aftemativ kann das Oxidpulver auch direkt in die Spritzpistole eingeführt werden und nur die Kunststoffpartikel werden extem mit einem Putverrohr 4 zugegeben. Zu Beginn des Spritzvorgangs werden keine Kunststoffpartikel zugeführt. Beispielgemaß wird nun sukzessive die Zahl der Kunststoffpartikel im Spritzstrahl erhöht, bis hin zu einem Anteil von 60 vol.-% an der Gesamtmenge des Spritzmaterials. Auf diese Weise entsteht eine Spritzschicht, in welcher der Kunststoffanteil vom Korpus des Kochgeschirrs zur Oberfläche hin zunimmt und welche sich hinsichtlich Antihafteigenschaft, Kratzfestigkeit und Haltbarkeit besonders auszeichnet.

## Patentansprüche

1. Verfahren zum Beschichten von Kochgeschirr mittels thermischen Spritzens, wobei die schichtausbildenden Kunststoffpartikel und Oxid-Partikel dem Spritzstrahl zugeführt werden, und wobei die Kunststoffpartikel und die Oxid-Partikel getrennt und - in Spritzrichtung gesehen - mit einem Abstand voneinander zugegeben werden, und wobei die Zugabe der Kunststoffpartikel von der Spritzdüse weiter entfernt erfolgt, als diejenige der Oxid-Partikel, **dadurch gekennzeichnet, dass** der Kunststoffanteil beim Beschichten gleichmäßig oder sprunghaft erhöht wird, wobei das Beschichten in einem Arbeitsgang erfolgt.

2. Verfahren nach Anspruch 1, **dadurch gekennzeichnet, dass** die Kunststoffpartikel bis zu 80 Vol.-% an der Gesamtmenge der Spritzpartikel zugegeben werden.

3. Verfahren nach einem der Ansprüche 1 oder 2, **dadurch gekennzeichnet, dass** Kunststoffanteite von 10 bis 70 Vol.-%, vorzugsweise von 30 bis 60 Vol.-% im Spritzmaterial, verwendet werden.

4. Verfahren nach einem der Ansprüche 1 bis 3, **dadurch gekennzeichnet, dass** die Beschichtung nach dem Verfahren des Plasmaspritzens oder des Hochgeschwindungskeits-Flammspritzen erfolgt.

5. Verfahren nach einem der Ansprüche 1 bis 4, **dadurch gekennzeichnet, dass** der Abstand für die Zugabe der Kunststoffpartikel soweit von der Spritzdüse entfernt ist, dass die thermische Energie im Spritzstrahl soweit abgesunken ist, dass die Kunststoffpartikel nur noch angeschmolzen werden, während die Oxid-Partikel an einer Stelle mit höherer thermischer Energie zugegeben werden.

6. Verfahren nach einem der Ansprüche 1 bis 5, **dadurch gekennzeichnet, dass** der Winkel, unter welchem die Spritzpartikel zugefügt werden, zwischen 30° und 150° - bezogen auf die Spritzrichtung - gewählt wird.

7. Verfahren nach einem der Ansprüche 1 bis 6, **dadurch gekennzeichnet, dass** als Oxide Al₂O₃ oder Al₂O₂TiO₂ benutzt werden.

8. Verfahren nach einem der Ansprüche 1 bis 7, **dadurch gekennzeichnet, dass** die Gase Propan, Propen, Ethylen, Acethylen, Wasserstoff, Sauerstoff und Inertgase verwendet werden.

9. Verfahren nach einem der Ansprüche 1 bis 8, **dadurch gekennzeichnet, dass als** Kunststoffpartikel PTFE (Teflon) benutzt wird.

10. Kochgeschirr mit einer thermisch gespritzten, kratzfesten Antihaftbeschichtung aus Kunststoff und Oxiden, wobei der Anteil des Kunststoffs in der Gesamtmenge des Spritzmaterials bis zu 80 Vol.-% beträgt, **dadurch gekennzeichnet, dass** der Anteil des Kunststoffs innerhalb einer, in einem Arbeitsgang aufgespritzten Beschichtung gleichmäßig oder sprunghaft zunimmt und nur die oberste Schicht einen Kunststoffanteil von bis zu 80 Vol.-% am Spritzmaterial erreicht.

11. Kochgeschirr nach Anspruch 10, **dadurch gekennzeichnet, dass** die Beschichtung mittels Plasmaspritzen oder Hochgeschwindigkeits-Flammspritzen aufgebracht ist

12. Kochgeschirr nach einem der Ansprüche 10 oder 11, **dadurch gekennzeichnet, dass** der Korpus des Kochgeschirrs aus Aluminium, Aluminium-Legierungen, Guss oder Edelstahl besteht.

## Claims

1. Process for coating cookware by means of thermal spraying, in which the layer-forming plastics particles and oxide particles are fed to the spray jet, and in which the plastics particles and the oxide particles are added separately and at a distance - as seen in the spraying direction - from one another, and in which the point at which the plastics particles are added is further away from the spray nozzle than the point at which the oxide particles are added, **characterized in that** the plastics content is increased uniformly or suddenly during coating, with the coating being carried out in a single operation.

2. Process according to Claim 1, **characterized in that** the plastics particles are added in an amount of up to 80% by volume of the total quantity of the spray particles.

3. Process according to Claim 1 or 2, **characterized in that** plastics contents of from 10 to 70% by volume, preferably from 30 to 60% by volume, are used in the spray material.

4. Process according to any of Claims 1 to 3, **characterized in that** the coating is carried out using the plasma spraying process or the high-velocity oxyfuel spraying process.

5. Process according to any of Claims 1 to 4, **characterized in that** the distance at which the plastics particles are added is sufficiently far away from the spray nozzle for the thermal energy in the spray jet to have dropped to a sufficient extent for the plastics particles to be only partially fused, whereas the oxide particles are added at a location where the thermal energy is higher.

6. Process according to any of Claims 1 to 5, **characterized in that** the angle at which the spray particles are added is selected to be between 30° and 150° with respect to the spraying direction.

7. Process according to any of Claims 1 to 6, **characterized in that** the oxides used are Al₂O₃ or Al₂O₂TiO₂.

8. Process according to any of Claims 1 to 7, **characterized in that** the gases propane, propene, ethylene, acetylene, hydrogen, oxygen and inert gases are used.

9. Process according to any of Claims 1 to 8, **characterized in that** the plastics particles used are PTFE (Teflon).

10. Cookware having a thermally sprayed, scratchproof non-stick coating comprising plastic and oxides, the plastics content in the total quantity of spray material amounting to up to 80% by volume, **characterized in that** the plastics content increases uniformly or suddenly within a coating which is sprayed on in a single operation, and only the uppermost layer reaches a plastics content of up to 80% by volume in the sprayed material.

11. Cookware according to Claim 10, **characterized in that** the coating is applied by means of plasma spraying or high-velocity oxy fuel spraying.

12. Cookware according to Claim 10 or 11, **characterized in that** the main body of the cookware consists of aluminium, aluminium alloys, cast iron or stainless steel.

## Revendications

1. Procédé en vue du revêtement de vaisselle pour cuisson à l'aide de pulvérisation thermique, les particules de matières synthétiques et les particules d'oxydes, formant des couches, étant acheminées au jet de pulvérisation, et les particules de matières synthétiques et les particules d'oxyde étant séparées et - du point de vue de la direction de pulvérisation - étant ajoutées avec un écart les unes par rapport aux autres, et l'addition des particules de matières synthétiques ayant lieu à un endroit plus éloigné de la buse de pulvérisation que celui des particules d'oxydes, **caractérisé en ce que** la proportion des matières synthétiques est augmentée lors du revêtement ou de manière progressive ou par un saut brusque, le revêtement se faisant au cours d'une procédure de travail unique.

2. Procédé selon la revendication 1, **caractérisé en ce que** les particules de matières synthétiques sont ajoutées jusqu'à raison de 80% en volume de la quantité totale des particules de pulvérisation.

3. Procédé selon l'une quelconque des revendications 1 ou 2, **caractérisé en ce que** des proportions de matières synthétiques de 10 à 70% en volume, de préférence, de 30 à 60% en volume de matériau de pulvérisation, sont utilisées.

4. Procédé selon l'une quelconque des revendications 1 à 3, **caractérisé en ce que** le revêtement se fait conformément au procédé de pulvérisation au plasma ou au procédé de pulvérisation à la flamme haute vitesse.

5. Procédé selon l'une quelconque des revendications 1 à 4, **caractérisé en ce que** l'écart en distance pour l'addition des particules de matières synthétiques est situé à un éloignement tel de la buse de pulvérisation que l'énergie thermique dans le jet de pulvérisation a chuté à un point tel que les particules de matières synthétiques ne sont que tout légèrement fondues, alors que les particules d'oxydes sont ajoutées à un endroit fournissant une énergie thermique plus élevée.

6. Procédé selon l'une quelconque des revendications 1 à 5, **caractérisé en ce que** l'angle sous lequel les particules de pulvérisation sont alimentées est choisi entre 30° et 150°, par rapport à la direction de pulvérisation.

7. Procédé selon l'une quelconque des revendications 1 à 6, **caractérisé en ce que** l'on utilise, en tant qu'oxydes, Al₂O₃ ou Al₂O₂TiO₂.

8. Procédé selon l'une quelconque des revendications 1 à 7, **caractérisé en ce que** l'on utilise les gaz propane, propène, éthylène, acétylène, hydrogène, oxygène et des gaz inertes.

9. Procédé selon l'une quelconque des revendications 1 à 8, **caractérisé en ce que** l'on utilise, en tant que particules de matières synthétiques, le PTFE (téflon).

10. Vaisselle pour cuisson avec un revêtement anti-adhérence résistant aux rayures, appliqué par pulvérisation thermique, fait d'une matière synthétique et d'oxydes, la proportion de la matière synthétique dans la quantité totale du matériau de pulvérisation allant jusqu'à 80% en volume, **caractérisé en ce que** la proportion de la matière synthétique augmente d'une manière progressive ou par un saut brusque au sein du revêtement pulvérisé en une étape unique et **en ce que** seule la couche supérieure parvient à une proportion de matière synthétique allant jusqu'à 80% en volume du matériau de pulvérisation.

11. Vaisselle pour cuisson selon la revendication 10, **caractérisé en ce que** le revêtement est appliqué par l'intermédiaire d'une pulvérisation au plasma ou d'une pulvérisation à la flamme haute vitesse.

12. Vaisselle pour cuisson selon l'une quelconque des revendications 10 ou 11, **caractérisé en ce que** le corps de la vaisselle pour cuisson est constitué d'aluminium, d'alliages d'aluminium, de fonte ou d'acier allié.
